# EUROPEAN PATENT SPECIFICATION

(11) **EP 2 065 127 B1**
(45) Date of publication and mention of the grant of the patent: **26.10.2011**
(21) Application number: 07806318.7
(22) Date of filing: 30.08.2007
(51) Int. Cl.: B23Q 11/00

(54) **COOLANT CLEANING DEVICE FOR MACHINE TOOL**
KÜHLMITTELREINIGUNGSVORRICHTUNG FÜR WERKZEUGMASCHINE
DISPOSITIF DE NETTOYAGE DE LIQUIDE DE REFROIDISSEMENT POUR MACHINE-OUTIL

(30) Priority: 21.09.2006 JP 2006255974
(43) Date of publication of application: 03.06.2009
(73) Proprietor: Sumitomo Heavy Industries Finetech, Ltd., Kurashiki-shi, Okayama 713-8501 (JP)
(72) Inventor: FUJITA, Yoshihiro, Kurashiki-shi, Okayama 713-8501 (JP); NAKAHARA, Tsukasa, Kurashiki-shi, Okayama 713-8501 (JP)
(74) Representative: Geyer, Ulrich F.
(86) International application number: PCT/JP2007/066841
(87) International publication number: WO 2008/035551

(56) References cited:
- JP-A- 9 309 043
- JP-A- 09 309 043
- JP-A- 10 033 400
- JP-A- 10 033 400
- JP-A- 2002 172 538
- JP-A- 2003 275 938
- JP-U- 3 055 421

## Description

### Technical Field

The present invention relates to a liquid coolant cleaner for recycling a liquid coolant used in a machine tool. The invention particularly relates to the liquid coolant cleaner for a machine tool that is a multistage liquid coolant cleaner, a combination of a magnetic adsorbing-type magnetic separator and a cyclone-type centrifugal remover, wherein only a clean tank that stores a cleaned liquid coolant is installed, thereby eliminating the need to clean the interior portion of the tank.

### Background Art

A liquid coolant cleaner for recycling a liquid coolant used in a machine tool separates, cutting dust, cutting chips and the like discharged along with the liquid coolant in the process of cutting, grinding and the like of metallic materials, in particular, magnetic materials typified by steel materials, from a liquid content and collects them. Since cutting dust, cutting chips and the like have various shapes, a variety of magnetic separators (and collectors) have been developed from the viewpoint of collection efficiency.

Furthermore, fine powder, a non-magnetic sludge and the like that cannot be separated and collected by a magnetic separator (and a collector) are often collected by being separated by settling in a settling tank, or by being separated by stirring in the settling tank. In addition, a multistage liquid coolant cleaner, a combination of various magnetic separators (and collectors) and the settling tank described above, has also been developed.

For example, the coolant cleaner described in Patent Document 1 includes a primary circular vortex coolant tank as a settling tank, and sends a liquid coolant separated in the primary circular vortex coolant tank to a magnetic separator. Further, in a secondary circular vortex coolant tank, fine powder is separated by settling from the liquid coolant separated by the magnetic separator, and a residual sludge is removed by centrifugal force exerted on the sludge by a cyclone device.

Furthermore, the coolant cleaner described in Patent Document 2 includes a magnetic separator and a circular vortex coolant tank, and a liquid coolant separated by the magnetic separator is made into a vortex in the circular vortex coolant tank, thereby accumulating cutting chips at the central portion of the circular vortex coolant tank. The accumulated cutting chips are sucked by a jet pump and sent back to the magnetic separator again. A clean liquid coolant is sucked from the outer periphery of the circular vortex coolant tank and stored in a clean tank.

A coolant cleaner that performs multistage separation using a magnetic separation and a vortex settling, or a cyclone device as described above requires a dual-type tank including a dirty tank for settling and a clean tank that stores a clean liquid coolant after separation by settling or after cyclone separation.
Patent Document 1: JP 2005-028353A
Patent Document 2: JP 2005-040936A

### Disclosure of Invention

### Technical Problem

The coolant cleaners described above that perform multistage separation require installation space corresponding to multiple devices that are to be combined. For example, the coolant cleaners, a combination of a magnetic separator and a cyclone device, or a separate filtering device, without including a settling tank, have been developed in order to save space. However, it is necessary for such coolant cleaners to secure a predetermined amount of liquid coolant to such an extent that a supply pump that sends the liquid coolant after magnetic separation to the cyclone device does not pump air. Therefore, the liquid coolant after magnetic separation is stored in a primary tank, and when a certain amount of liquid coolant has been stored, the liquid coolant is sucked by the supply pump and sent to the cyclone device. Then, the liquid coolant is stored in a clean tank after cutting chips and the like has been separated, resulting in a problem that the devices require a dual tank system including a primary tank and a clean tank.

Furthermore, since a predetermined amount of liquid coolant containing a non-magnetic sludge and the like, which cannot be completely separated by the magnetic separator, is stored in the primary tank, the non-magnetic sludge settles in the primary tank. Accordingly, there has also been a problem in that it is necessary to clean the interior portion of the primary tank periodically.
Prior art document JP 09 309043 A discloses a coolant circulation system for surely removing machining chips included in a coolant in those circulating the coolant for a machine tool. The coolant circulation system is so constituted that a coolant reserved in a tank is supplied to a grinding machine through a coolant supply passage having a filter, and the coolant after use is recovered in the tank through a coolant recovery passage having a magnetic separator. Also, the coolant reserved in the tank is fed to the magnetic separator through a return passage.

The present invention was made in view of the foregoing circumstances, and it is an object of the invention to provide a liquid coolant cleaner for a machine tool that comprises only a clean tank that stores a clean liquid coolant, thereby making it possible to save installation space and to eliminate the need to clean the interior portion of the tank.

### Solution to Problem

This and other objects are solved by a liquid coolant cleaner for a machine tool, the liquid coolant cleaner having the features as set forth in claim 1. Preferred embodiments of the liquid coolant cleaner are stated in the subclaims.

The liquid coolant cleaner for a machine tool in accordance with the first aspect of the present invention comprises a magnetic separator that removes.mainly a magnetic substance from a spent liquid coolant generated by the machine tool, a non-magnetic substance separator/purifier that removes mainly a non-magnetic substance from a liquid coolant from which a magnetic substance has been removed by the magnetic separator, a clean tank that stores a clean liquid coolant from which the non-magnetic substance has been removed by the non-magnetic substance separator/purifier and a pump that sucks and supplies the liquid coolant to the non-magnetic substance separator/purifier, wherein the liquid coolant cleaner for a machine tool comprises a hopper that receives the liquid coolant from which the magnetic substance has been removed by the magnetic separator in the clean tank, the hopper includes an intake through which the clean liquid coolant stored in the clean tank is taken in, and the pump is configured to suck the liquid coolant in the hopper along with a predetermined amount of the clean liquid coolant taken in through the intake, and to supply the liquid coolant to the non-magnetic substance separator/purifier, and the hopper comprises, on a side wall in the vicinity of the liquid level in the clean tank, an openable and closable suction port that opens inward only when the liquid coolant is sucked by the pump.

According to the first aspect of the invention, the liquid coolant cleaner for a machine tool comprises the magnetic separator that removes mainly the magnetic substance from the spent liquid coolant generated by the machine tool, the non-magnetic substance separator/purifier that removes mainly the non-magnetic substance from the liquid coolant from which the magnetic substance has been removed by the magnetic separator, the clean tank that stores the clean liquid coolant from which the non-magnetic substance has been removed by the non-magnetic substance separator/purifier, and the pump that sucks and supplies the liquid coolant to the non-magnetic substance separator/purifier The liquid coolant cleaner for a machine tool comprises the hopper that receives the liquid coolant from which the magnetic substance has been removed by the magnetic separator in the clean tank. The hopper is provided with an intake through which the clean liquid coolant stored in the clean tank is taken in, and the pump is configured to suck the liquid coolant in the hopper along with a predetermined amount of the clean liquid coolant taken in through the intake, and to supply the liquid coolant to the non-magnetic substance separator/purifier.

By adopting a semi-closed tank system in which the liquid coolant that has been received by the hopper and from which only a magnetic substance has been removed is sucked along with a predetermined amount of the clean liquid coolant stored in the clean tank, and supplied to the non-magnetic substance separator/purifier, it becomes possible to omit, or to downsize the primary tank that stores the liquid coolant from which the magnetic substance has been removed by the magnetic separator, thereby to minimize installation space. Moreover, omitting or downsizing the primary tank makes it possible to eliminate the need of maintenance such as cleaning of the primary tank. Furthermore, the openable and closable suction port that opens inward only when the liquid coolant is sucked by the pump is provided on a side wall of the hopper in the vicinity of the liquid level in the clean tank; accordingly, abrasive grains and the like in the form of the sludge floating up to the liquid level of the clean liquid coolant stored in the clean tank can be sent to a cleaning cycle reliably, which makes it possible to reduce the number of maintenance processes such as cleaning of the interior portion of the clean tank. Furthermore, since a large amount of the clean liquid coolant can be sucked in, it will also be possible to prevent the pump from pumping air.

Furthermore, a liquid coolant cleaner for a machine tool in accordance with the second aspect of the present invention in the first aspect of the invention is characterized that the non-magnetic substance separator/purifier is either a cyclone-type remover or a filter-type purifier.

According to the second aspect of the invention, using either a cyclone-type remover or a filter-type purifier as a non-magnetic substance separator/purifier makes it possible to remove fine powder and the like other than a magnetic substance effectively.

Furthermore, a liquid coolant cleaner for a machine tool in accordance with the third aspect of the present invention in the first or the second aspect of the invention is characterized that the hopper comprises, at the intake, a leak prevention means that prevents the liquid coolant received therein from leaking out to the clean tank.

According to the third aspect of the invention, the hopper comprises, at the intake, the leak prevention means that prevents the liquid coolant received therein from leaking out to the clean tank; accordingly, even though the semi-closed tank system is adopted, the clean liquid coolant stored in the clean tank will not be contaminated, which makes it possible to reduce the number of maintenance processes such as cleaning of the interior portion of the clean tank.

Furthermore, a liquid coolant cleaner for a machine tool in accordance with the fourth aspect of the present invention in the first aspect of the invention is characterized that the non-magnetic substance separator/purifier is a cyclone-type remover, and a residual liquid coolant is separated and collected from the sludge discharged by the cyclone-type remover, and then forwarded to the magnetic separator.

According to the fourth aspect of the invention, the cyclone-type remover is used as the non-magnetic substance separator/purifier, and the residual liquid coolant is separated and collected from the sludge discharged by the cyclone-type remover, and then forwarded to the magnetic separator; accordingly, the residual liquid coolant can be sent back to the cleaning cycle again.

Furthermore, a liquid coolant cleaner for a machine tool in accordance with the fifth aspect of the present invention in any one of the first to the fourth and the fifth aspect of the invention is characterized that the pump is configured to discharge drain, and the drain is forwarded to the magnetic separator or the hopper.

According to the fifth aspect of the invention, the discharged drain is forwarded to the magnetic separator or the hopper; accordingly, the discharged drain can be sent back to the cleaning cycle of the liquid coolant again when the pump from which drain is discharged is used as the pump.

Furthermore, a liquid coolant cleaner for a machine tool in accordance with the seventh aspect of the present invention in any one of the first, the fourth and the fifth aspect of the invention is characterized that the magnetic separator and the pump are continuously operated for a predetermined period of time after the stoppage when the machine tool is stopped.

According to the sixth aspect of the invention, when the machine tool is stopped, the magnetic separator and the pump are continuously operated for a predetermined period of time after the stoppage, using, for example, an off delay (delay) timer; accordingly, a large amount of the clean liquid coolant can be sucked through the suction port, so that it becomes possible to collect the sludge and the like floating at the liquid level in the clean tank even more effectively.

### Advantageous Effects of Invention

According to the first aspect of the invention, by adopting a semi-closed tank system in which the liquid coolant that has been received by the hopper and from which only a magnetic substance has been removed is sucked along with a predetermined amount of the clean liquid coolant stored in the clean tank, and supplied to the non-magnetic substance separator/purifier, it becomes possible to omit or downsize the primary tank that stores the liquid coolant from which only the magnetic substance has been removed by the magnetic separator, thereby to minimize installation space. Moreover, as a result of omitting or downsizing the primary tank, it will not be necessary to perform maintenance such as cleaning of the primary tank. Furthermore, abrasive grains and the like in the form of the sludge floating up to the liquid level of the clean liquid coolant stored in the clean tank can be sent to the cleaning cycle reliably, which makes it possible to reduce the number of maintenance processes such as cleaning of the interior portion of the clean tank. Furthermore, since a large amount of the clean liquid coolant can be sucked in, it will also be possible to prevent the pump from pumping air.

According to the second aspect of the invention, it becomes possible to remove fine powder and the like other than the magnetic substance effectively.

According to the third aspect of the invention, even though a semi-closed tank system is adopted, the clean liquid coolant stored in the clean tank will not be contaminated, which makes it possible to reduce the number of maintenance processes such as cleaning the interior portion of the clean tank.

According to the fourth aspect of the invention, the residual liquid coolant can be sent back to the cleaning cycle again.

According to the fifth aspect of the invention, the discharged drain can be sent back to the cleaning cycle of the liquid coolant again.

According to the sixth aspect of the invention, a large amount of the clean liquid coolant can be sucked in through the suction port, so that it becomes possible to collect the sludge and the like floating at the liquid level in the clean tank even more effectively.

### Brief Description of Drawings

FIG.1 is a schematic diagram showing the configuration of a liquid coolant cleaner for a machine tool according to an embodiment of the present invention.
FIG.2 is a plan view showing the configuration of the liquid coolant cleaner for a machine tool according to an embodiment of the present invention.
FIG.3 is a schematic diagram showing the configuration in the vicinity of a hopper of the liquid coolant cleaner for a machine tool according to an embodiment of the present invention.
FIG.4 is a front view showing the configuration of the liquid coolant cleaner for a machine tool according to an embodiment of the present invention.
FIG.5 is a right side view showing the configuration of the liquid coolant cleaner for a machine tool according to an embodiment of the present invention.

### Reference Sings List

1 machine tool
3 magnetic separator
5 hopper
6 intake
7, 8a, 8b, 12, 13, 14, 23 pipe
10 non-magnetic substance separator/purifier (cyclone-type remover)
11 sludge settling tank
15, 16 collection chamber
20 clean tank
51 suction port
P1, P2 pump

### Best Mode for Carrying Out the Invention

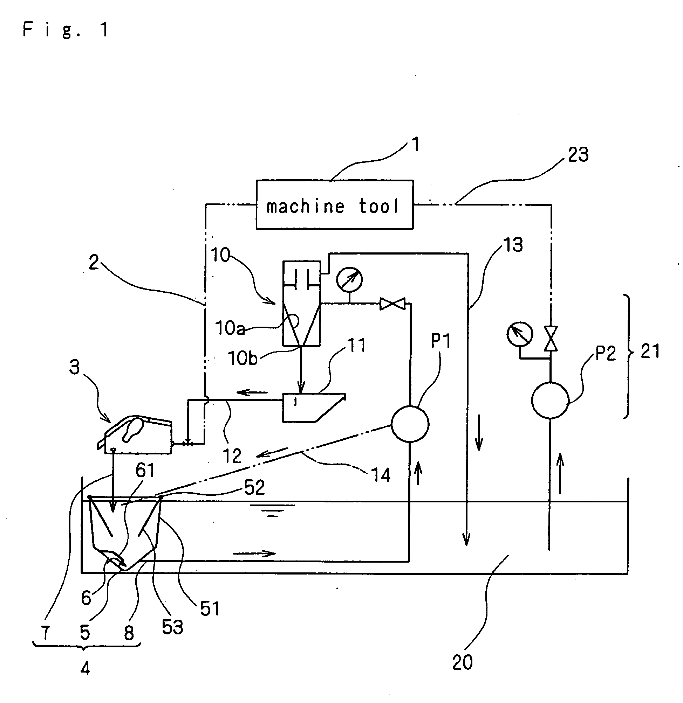

Hereinafter, the present invention will be described in detail based on the drawings showing an embodiment thereof. FIG.1 is a schematic diagram showing the configuration of a liquid coolant cleaner for a machine tool according to an embodiment of the present invention. As shown in FIG.1, the liquid coolant cleaner for a machine tool of this embodiment cleans a liquid coolant in two stages.

First, a spent liquid coolant used in a machine tool 1 is sent via a primary feeding path 2 to a magnetic separator 3. The magnetic separator 3 separates and collects mainly cutting chips and the like of the magnetic substance.

Next, the liquid coolant from which mainly the magnetic substance has been removed by the magnetic separator 3 is sent via a secondary feeding path 4 to a non-magnetic substance separator/purifier (e.g., a cyclone-type remover) 10. The non-magnetic substance separator/purifier 10 removes the non-magnetic substance such as fine chips and abrasive grains that could not be separated and collected by the magnetic separator 3.

Any known device capable of magnetically adsorbing or magnetically separating mainly cutting chips and the like of the magnetic substance, from the liquid coolant and filtering them, can be used as the magnetic separator 3.

Furthermore, by rendering the magnetic separator 3 compact, the overall liquid coolant cleaner for a machine tool can be rendered compact. For example, it is possible to use a rotating drum-type magnetic separator that contains a drum in which a magnet is disposed inside a cylindrical outer casing, and removes the magnetic substance by collecting a magnetic sludge adsorbed on the surface of the outer casing by magnetic force.

Also by rendering the non-magnetic substance separator/purifier 10 compact, the overall liquid coolant cleaner for a machine tool can be rendered compact. The non-magnetic substance separator/purifier 10 is not limited to the cyclone-type remover described above, and for example, may be a filter-type purifier that removes the non-magnetic substance such as fine chips, abrasive grains and the like with various filters. Hereinafter, a case will be described in which the cyclone-type remover 10 is used as the non-magnetic substance separator/purifier 10.

The cyclone-type remover 10 according to this embodiment flows the liquid coolant sucked by a pump P1, in the form of a vortex, while being maintained at a required pressure, from above a funnel-shape container disposed so that its inner diameter decreases downward. The liquid coolant flows downward while whirling on the inner surface of a funnel-shape container 10a, causing a non-magnetic sludge to be separated by centrifugal force. A clean liquid coolant from which the non-magnetic sludge has been separated is sent from above the cyclone-type remover 10 via a pipe 13 to a clean tank 20, and stored in the clean tank 20.

The separated non-magnetic sludge is discharged from a lower nozzle 10b of the funnel-shape container 10a. The discharged non-magnetic sludge contains a small amount of liquid coolant. Therefore, the non-magnetic sludge discharged from the lower nozzle 10b is poured from above to a sludge settling tank 11 with a sloped side surface, and separated into the sludge and the liquid coolant. That is, the liquid coolant overflowed from above the sludge settling tank 11 is cleaned again by being sent via a pipe 12 to the magnetic separator 3. The sludge settled at the bottom of the sludge settling tank 11 is discharged with a scraper. It is, of course, possible to form the sludge settling tank 11 with a scraper-type conveyor so that the sludge can be directly discharged.

The clean tank 20 that stores the clean liquid coolant, from which the non-magnetic substance has been removed, comprises a coolant supplier 21 that sucks the stored clean liquid coolant by a pump P2 and supplies the clean liquid coolant to the machine tool 1. For example, when the machine tool 1 is a grinder, a pipe 23 to supply the clean liquid coolant for cleaning the grinding points and the bed is laid from the pump P2.

In order to collect the spent liquid coolant, which has been supplied to the grinding points and the bed and used, the spent liquid coolant is sent to the magnetic separator 3, for example, by providing a liquid coolant guide and guiding the liquid coolant to the primary feeding path 2. Furthermore, the liquid coolant from which the magnetic substance has been removed by the magnetic separator 3 is sent from the magnetic separator 3 via the secondary feeding path 4 to the cyclone-type remover 10. In this embodiment, the secondary feeding path 4 is composed of a hopper 5 provided in the clean tank 20, a pipe 7 which sends the liquid coolant from which the magnetic substance has been removed by the magnetic separator 3 to the hopper 5, and a pipe 8 connected from the hopper 5 via the pump P1 to the cyclone-type remover 10.

The hopper 5 receives the liquid coolant from which the magnetic substance has been removed, and the received liquid coolant is supplied by the pump P1 to the cyclone-type remover 10. The throughput of the cyclone-type remover 10 per predetermined time exceeds the liquid coolant supply amount of the coolant supplier 21 per predetermined time and the throughput of the magnetic separator 3 per predetermined time. Therefore, it is necessary to secure a required amount of liquid coolant to prevent the pump P1 from pumping air.

For this reason, the hopper 5 is provided with an intake 6 of the clean liquid coolant in the clean tank 20, and the required amount of liquid coolant is secured by taking in the clean liquid coolant in the clean tank 20. The pump P1 supplies, to the cyclone-type remover 10, a liquid mixture of the liquid coolant from which a magnetic substance has been removed and the clean liquid coolant taken in through the intake 6.

With such a configuration, a tank that stores the required amount of liquid coolant to prevent the pump P1 from pumping air is not necessary, and the hopper 5 capable of receiving a small amount of liquid coolant will suffice; therefore, the hopper 5 is not required to have a large capacity, and can be disposed in the clean tank 20. Accordingly, the overall liquid coolant cleaner for a machine tool can be rendered compact.

Note that it is unlikely that the liquid coolant from which only the magnetic substance has been removed leaks out from the intake 6 into the clean tank 20 since the clean liquid coolant is sucked from the hopper 5 through the intake 6 only when suction is performed using the pump P1. However, in order to prevent contamination of the clean liquid coolant in the clean tank 20 more reliably, it is preferable that the intake 6 for the clean liquid coolant is provided with a well-known leak prevention means. There is no particular limitation with respect to the leak prevention means.

For example, as shown in FIG.1, the intake 6 is provided at the sloped portion on the bottom of the hopper 5, and a cover 61 that covers the intake 6 and is open only at its lower portion is attached. By this way, when suction is performed by the pump P1, the clean liquid coolant is sucked through the intake 6 via the lower open portion of the cover 61 into the hopper 5 (in the direction indicated by the arrow in FIG.1). On the other hand, when suction is not performed by the pump P1, the liquid coolant does not flow back to the clean tank 20 because of the difference in liquid pressure with the clean liquid coolant. Accordingly, the liquid coolant inside the hopper 5, from which only the magnetic substance has been removed, will not leak out into the clean tank 20.

Note that the leak prevention means may be provided by forming a portion of the cover in the vicinity of the intake 6 so as to have a labyrinth structure, or by providing the intake 6 with a liquid filter in order to prevent contamination of the clean liquid coolant more reliably.

Furthermore, it is preferable that the intake 6 is provided at the lowest possible portion of the hopper 5. This is because there is a possibility that an unclean liquid coolant may be sent back to the hopper 5 if the pumps P1, P2 are simultaneously stopped when stopping the liquid coolant cleaner for a machine tool.

That is, since the unclean liquid coolant passes from the lower nozzle 10b of the cyclone-type remover 10 via the pipes 12, 7 and drops on the hopper 5, there is a possibility that the unclean liquid coolant overflows the hopper 5, or flows back from the intake 6 and leaks out into the clean tank 20. Therefore, only the pump P1 is continuously operated at stoppage and the portion from the hopper 5 to the cyclone-type remover 10 is entirely filled with the clean liquid coolant. This makes it possible to perform stoppage without contaminating the clean liquid coolant stored in the clean tank 20, even if the unclean liquid coolant has overflowed the hopper 5, or flowed back from the intake 6 and leaked out into the clean tank 20.

The hopper 5 may be open at its top, or may be configured so that there is no opening portion other than the intake 6 except for the pipes. It is also possible to adopt a configuration in which an openable and closable suction port 51 that can open only when suction is performed by the pump is provided in the vicinity of the liquid level so that the liquid coolant in the vicinity of the liquid level of the clean liquid coolant stored in the clean tank 20 can be sucked, thereby enabling the collection of the sludge floating up to the liquid coolant surface in the clean tank 20. By this way, even if floating sludge and the like are present in the clean liquid coolant stored in the clean tank 20, it can be sent into the cleaning cycle, thereby making it possible to omit a maintenance process such as cleaning of the interior portion of the clean tank 20.

In this embodiment, the hopper 5 is disposed being immersed in the clean tank 20 to allow the clean liquid coolant to flow automatically thereinto; however, the invention is not particularly limited to this, and the hopper 5 may be disposed outside the clean tank with the intake 6 provided on the side wall.

Preferably, the pump P1 is disposed outside the clean tank 20 so as to prevent the contamination of the clean liquid coolant stored in the clean tank 20. Further, even if the pump P1 from which drain is discharged is used as a self-priming pump, it is possible to clean the liquid coolant to be used effectively without wasting the liquid coolant by forwarding the drain to the magnetic separator 3 or the hopper 5.

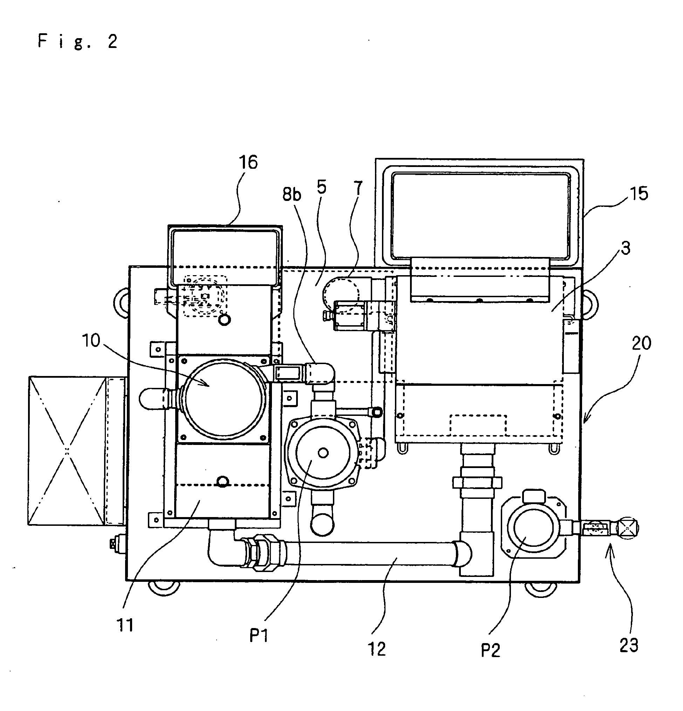

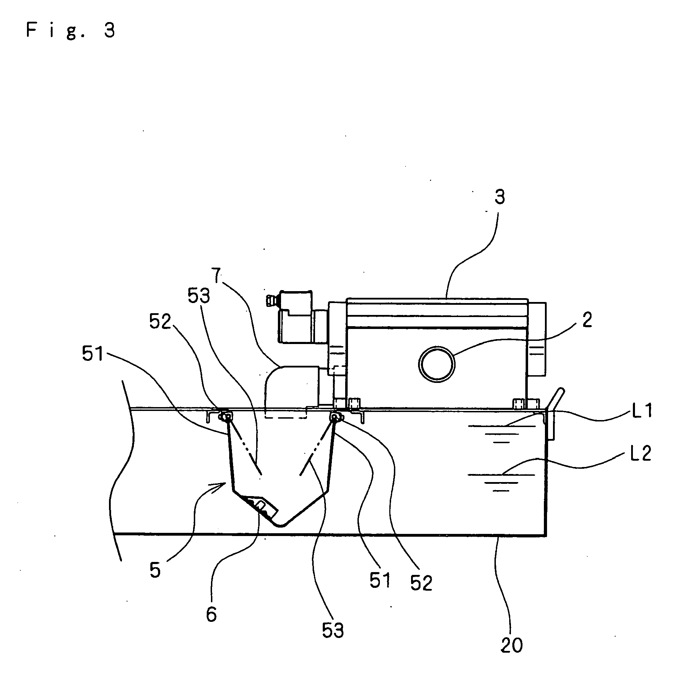

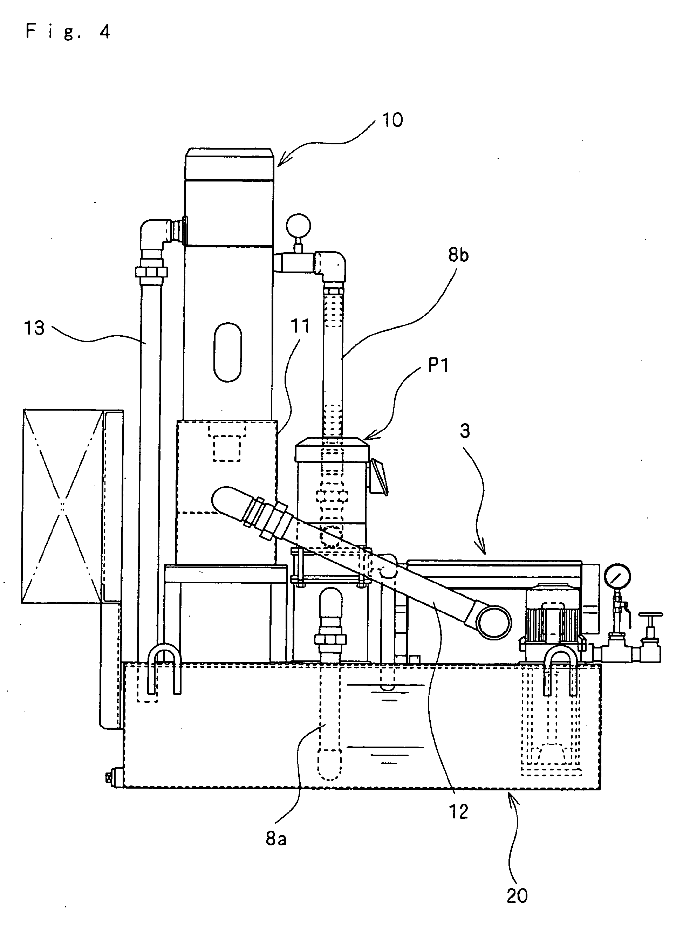

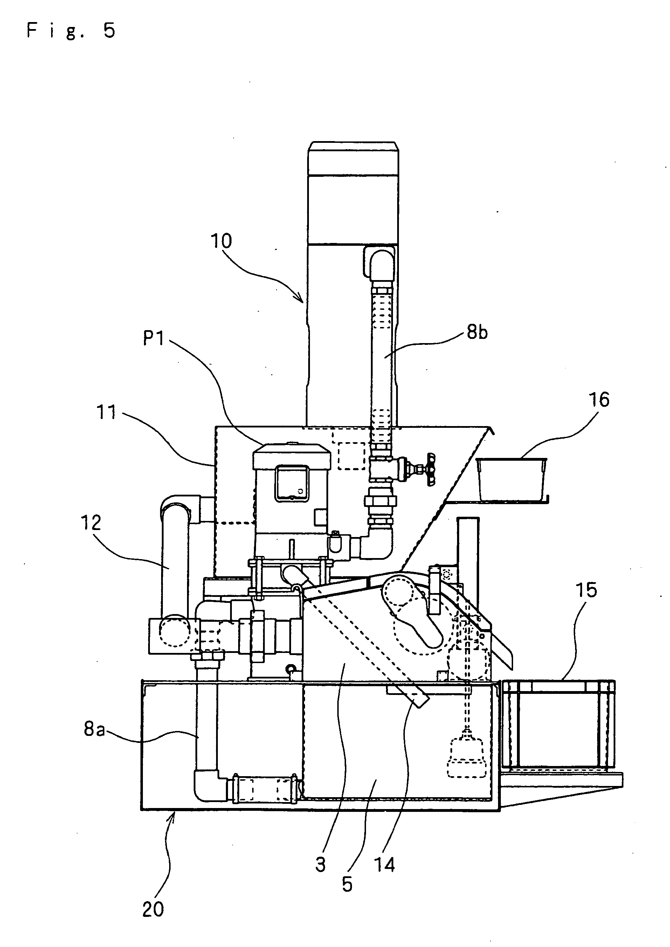

FIG.2 through 5 show the detailed configuration of a liquid coolant cleaner for a machine tool according to an embodiment of the present invention. FIG.2 is a plan view showing the configuration of the liquid coolant cleaner for a machine tool according to an embodiment of the present invention. FIG.3 is a schematic diagram showing the configuration in the vicinity of the hopper 5 of the liquid coolant cleaner for a machine tool according to an embodiment of the present invention. FIG.4 is a front view showing the configuration of the liquid coolant cleaner for a machine tool according to an embodiment of the present invention. FIG.5 is a right side view showing the configuration of the liquid coolant cleaner for a machine tool according to an embodiment of the present invention.

As shown in FIG.2, the clean tank 20 has the shape of a sealed rectangular solid in which a rectangular container is provided with a top lid, and the magnetic separator 3, the cyclone-type remover 10, the pump P1 and the pump P2 are placed on the top lid. Note that external drain-type self-priming pumps are used as the pumps P1, P2.

The rotating drum-type magnetic separator 3 is directly placed on the right side of the top surface of the clean tank 20 at the back, and the pump P2 is placed in the front thereof. The sludge settling tank 11 having a sloped side surface is provided via a mount on the left side of the top surface of the clean tank 20, and a cylindrical cyclone-type remover 10 is directly placed on the top lid of the sludge settling tank 11. The lower nozzle 10b of the cyclone-type remover 10 is guided into the sludge settling tank 11, and the pipe 12 for the liquid coolant that has overflowed the sludge settling tank 11 is connected to a contaminated liquid coolant inlet of the magnetic separator 3. The pump P1 is placed via the mount at the center of the upper surface of the clean tank 20, and a pipe 8b to the cyclone-type remover 10 is connected to the pump P1.

The hopper 5 is a container substantially having a triangular pyramid cross section as shown in FIG.3, and placed approximately at the center at the back of the clean tank 20 as shown in FIG.2. The pipe 7 that is provided at the top lid of the hopper 5 and connected to the magnetic separator 3 is laid facing a portion directly above the hopper 5 so that the pipe 7 can guide the liquid coolant from which the magnetic substance has been removed. As shown in FIG.4 and Fig.5, a pipe 8a from the pump P1 is connected to the bottom of the hopper 5. Note that the drain of the pump P1 is sent back to the hopper 5 via a pipe 14. It is, of course, possible to connect the pipe 14 to the magnetic separator 3, in which case the magnetic substance contained in the drain also can be removed reliably.

As shown in FIG.3, the suction ports 51, 51 are provided on both sides of the side wall of the hopper 5 at a location including the area in the vicinity of the liquid level of the clean liquid coolant, hinges 52, 52 are provided above the suction ports 51, 51, and openable and closable lids 53, 53 are provided that have a size capable of covering the suction ports 51, 51 and that can open and close around the hinges 52, 52. When suction is performed by the pump P1, not only the liquid coolant received in the hopper 5 (i.e., the liquid coolant from which only the magnetic substance has been removed), but also the clean liquid coolant in the clean tank 20 is sucked as a result of opening the openable and closable lids 53, 53 toward the inside of the hopper 5.

Since the suction ports 51, 51 are open in the vicinity of the liquid level of the clean liquid coolant in the clean tank 20, floating sludge, which tends to float at the liquid level, can also be taken into the hopper 5. Accordingly, such floating sludge can also be sent into the cleaning cycle, thereby cleaning the clean liquid coolant in the clean tank 20 more effectively. Because of this, it is not particularly necessary to clean the interior portion of the clean tank 20, which makes it possible to reduce the number of maintenance processes. Note that it is preferable to provide the suction ports 51, 51 so as to include the maximum water level L1 and the minimum water level L2 as shown in FIG.3 when the liquid level of the clean liquid coolant in the clean tank 20 is between the water levels L1 and L2.

In addition, as a result of comparing and examining the state at the liquid level of the clean liquid coolant stored in the clean tank 20 in the case where the suction ports 51, 51 are provided and in the case where they are not provided, it was found that when the suction ports 51, 51 were not provided, fine particle powder that could not be completely removed even by the cyclone-type remover 10 occasionally floated at the liquid level without settling in the clean liquid coolant. On the other hand, it was confirmed that when the suction ports 51, 51 were provided, almost no floating matter was observed at the liquid level of the clean liquid coolant, and the interior portion of the clean tank 20 was filled with the clean liquid coolant.

Hereinafter, a cleaning process for the liquid coolant that has been used will be described. The spent liquid coolant used in the machine tool 1 is guided to the magnetic separator 3, where mainly cutting chips of the magnetic substance and the like are removed. The liquid coolant from which the magnetic substance has been removed is guided via the pipe 7 to the hopper 5 in the clean tank 20 in which the clean liquid coolant is stored.

The liquid coolant received by the hopper 5 is sucked by the pump P1 along with the required amount of clean liquid coolant, and sent via the pipes 8 (8a, 8b) to the cyclone-type remover 10. Note that the sludge separated and collected by the magnetic separator 3 is discharged to a collection chamber 15 provided at the back of the clean tank 20 on the side wall.

With the cyclone-type remover 10, mainly fine powder and the like of the non-magnetic substance are removed by centrifugal force caused by a predetermined pump pressure, that liquid coolant is stored via the pipe 13 in the clean tank 20 as the clean liquid coolant. The sludge containing fine powder and the like of the non-magnetic substance dropping from the lower nozzle 10b of the cyclone-type remover 10 are separated into the sludge and the liquid coolant in the sludge settling tank 11. The liquid coolant that has overflowed the sludge settling tank 11 is sent back via the pipe 12 to the magnetic separator 3. The sludge separated by settling in the sludge settling tank 11 is scraped out using a scraper and the like, and discharged to a collection chamber 16 provided outside the sludge settling tank 11.

When stopping the machine tool 1, it is not preferable to completely stop the liquid coolant cleaner for a machine tool according to this embodiment at the same time. This is because there is a possibility that the unclean liquid coolant may remain in the pipes, and that residual liquid coolant may be sent back to the hopper 5.

When the unclean liquid coolant has dropped from the lower nozzle 10b of the cyclone-type remover 10 via the pipes 12, 7 to the hopper 5, there is a possibility that the unclean liquid coolant may overflow the hopper 5, or may flow back from the intake 6 and leak out into the clean tank 20. Therefore, after stopping the machine tool 1, the pump P1 and the magnetic separator 3 are continuously operated for a certain period of time. The continuous operation time is measured, for example, using an off delay (delay) timer.

By this way, the liquid coolant remaining in the pipes will be the liquid coolant from which the magnetic substance has been removed at least by the magnetic separator 3; accordingly, the residual liquid coolant will not contaminate the clean liquid coolant stored in the clean tank 20 even if it overflows the hopper 5, or flows back from the intake 6 and leaks out into the clean tank 20. Furthermore, a large amount of clean liquid coolant can be taken in through the suction ports 51, 51 to facilitate cleaning of the interior portion of the pipes, and to suck the sludge and the like floating at the liquid level in the clean tank 20 at the same time, thereby increasing the level of cleanliness of the clean liquid coolant stored in the clean tank 20 more effectively

Note that a filter-type purifier that performs filtration using multiple layers of filter paper may be used in place of the cyclone-type remover 10. It was confirmed that a comparable level of liquid coolant cleaning capability was realized when the device of the present invention using such a filter-type purifier was actually operated in the same manner as in the case where the cyclone-type remover 10 was used.

As described above, according to this embodiment, by preparing the clean tank 20 that has a capacity appropriate to the amount of clean liquid coolant stored that is set according to the amount of liquid coolant required per predetermined time by the machine tool 1 to be used, all the necessary components, the magnetic separator 3, the cyclone-type remover (non-magnetic substance separator/purifier) 10, the pump P1 that feeds the contaminated liquid coolant, and the pump P2 that feeds the clean liquid coolant, can be placed on the clean tank 20; accordingly, only installation area for the clean tank 20 is required so that installation space can be minimized. Furthermore, with the configuration in which the hopper 5 is disposed within the clean tank 20, it is not necessary to dispose the primary tank that stores the liquid coolant that has undergone a primary filtration between the magnetic separator and the non-magnetic substance separator/purifier, which makes it possible to render the overall device compact, and to omit a maintenance process such as cleaning of the interior portion of the tank.

## Claims

1. A liquid coolant cleaner for a machine tool (1), comprising:
a magnetic separator (3) that removes mainly a magnetic substance from a spent liquid coolant generated by a machine tool (1);
a non-magnetic substance separator/purifier (10) that removes mainly a non-magnetic substance from a liquid coolant from which a magnetic substance has been removed by the magnetic separator (3);
a clean tank (20) that stores a clean liquid coolant from which a non-magnetic substance has been removed by the non-magnetic substance separator/purifier (10); and
a pump (P1, P2) that sucks and supplies the liquid coolant to the non-magnetic substance separator/purifier (10);
a hopper (5) that receives the liquid coolant from which a magnetic substance has been removed by the magnetic separator (3) in the clean tank (20),
the hopper (5) includes an intake (6) through which the clean liquid coolant stored in the clean tank (20) is taken in, and
the pump (P1, P2) is configured to suck the liquid coolant in the hopper (5) along with a predetermined amount of the clean liquid coolant taken in through the intake (6), and to supply the liquid coolant to the non-magnetic substance separator/purifier (10);
**characterized in that**
the hopper (5) comprises, on a side wall in the vicinity of the liquid level in the clean tank (20), an openable and closable suction port (51) that opens inward only when the liquid coolant is sucked by the pump (P1, P2).

2. The liquid coolant cleaner for a machine tool (1) according to claim 1,
wherein the non-magnetic substance separator/purifier (10) is either a cyclone-type remover or a filter-type purifier.

3. The liquid coolant cleaner for a machine tool (1) according to claim 1,
wherein the hopper (5) comprises, at the intake (6), a leak prevention means that prevents the liquid coolant received therein from leaking out into the clean tank (20).

4. The liquid coolant cleaner for a machine tool (1) according to claim 2,
wherein the hopper (5) comprises, at the intake (6), a leak prevention means that prevents the liquid coolant received therein from leaking out into the clean tank (20).

5. The liquid coolant cleaner for a machine tool (1) according to claim 1,
wherein the non-magnetic substance separator/purifier (10) is a cyclone-type remover, and
a residual liquid coolant is separated and collected from the sludge discharged by the cyclone-type remover, and then forwarded to the magnetic separator (3).

6. The liquid coolant cleaner for a machine tool (1) according to claim 1,
wherein the pump (P1, P2) is configured to discharge drain, and
the drain is forwarded to the magnetic separator (3) or the hopper (5).

7. The liquid coolant cleaner for a machine tool (1) according to claim 2, wherein the pump (1I, P2) is configured to discharge drain and the drain is forwarded to the magnetic separator (3) or the hopper (5).

8. The liquid coolant cleaner for a machine tool (1) according to claim 3, wherein the pump (P1, P2) is configured to discharge drain, and the drain is forwarded to the magnetic separator (3) or the hopper (5).

9. The liquid coolant cleaner for a machine tool (1) according to claim 4, wherein the pump (P1, P2) is configured to discharge drain, and the drain is forwarded to the magnetic separator (3) or the hopper (5).

10. The liquid coolant cleaner for a machine tool (1) according to claim 5, wherein the pump (P1, P2) is configured to discharge drain, and the drain is forwarded to the magnetic separator (3) or the hopper (5).

11. The liquid coolant cleaner for a machine tool (1) according to any one of claims 1,5 through 10,
wherein, when the machine tool (1) is stopped, the magnetic separator (3) and the pump (P1, P2) are continuously operated for a predetermined period of time after said stoppage.

## Patentansprüche

1. Flüssig-Kühlmittel-Reinigungsvorrichtung für eine Werkzeugmaschine (1), umfassend:
einen magnetischen Abscheider (3), der hauptsächlich eine magnetische Substanz von einem von einer Werkzeugmaschine (1) verbrauchten Flüssig-Kühlmittel entfernt;
ein Abscheider/Reiniger (10) für nicht-magnetische Substanzen, der hauptsächlich eine nicht-magnetische Substanz von einem Flüssig-Kühlmittel entfernt, von dem eine magnetische Substanz durch den magnetischen Abscheider (3) entfernt worden war;
ein Reintank (20), der ein reines Flüssig-Kühlmittel speichert, von dem eine nicht-magnetische Substanz durch den Abscheider/Reiniger (10) für die nicht-magnetische Substanz entfernt wurde; und
eine Pumpe (P1, P2), die das Flüssig-Kühlmittel ansaugt und dem Abscheider/Reiniger (10) für die nicht-magnetische Substanz bereitstellt;
ein Trichter (5), der das Flüssig-Kühlmittel zugeleitet erhält, von dem eine magnetische Substanz durch den magnetischen Abscheider (3) entfernt worden ist, im Reintank (20),
wobei der Trichter (5) einen Einlass (6) aufweist, durch den das gereinigte Flüssig-Kühlmittel, das im Reintank (20) gespeichert ist, eingelassen wird, und
wobei die Pumpe (P1, P2) so ausgebildet ist, dass sie das Flüssig-Kühlmittel im Trichter (5) zusammen mit einer vorgegebenen Menge des reinen Flüssig-Kühlmittels ansaugt, das durch den Einlass (16) gelangt, und das Flüssig-Kühlmittel dem Abscheider/Reiniger (10) für die nicht-magnetische Substanz bereitstellt;
**dadurch gekennzeichnet, dass**
der Trichter (5) an einer Seitenwand in der Nähe des Flüssigkeitspegels im Reintank (20) einen zu öffnenden und zu schließenden Ansaugeinlass (51) umfasst, der sich nur dann nach innen öffnet, wenn das Flüssig-Kühlmittel durch die Pumpe (P1, P2) angesaugt wird.

2. Flüssig-Kühlmittel-Reinigungsvorrichtung für eine Werkzeugmaschine (1) nach Anspruch 1, wobei der Abscheider/Reiniger (10) für die nicht-magnetische Substanz entweder ein Zyklon-Typ-Entferner oder ein Filter-Typ-Reiniger ist.

3. Flüssig-Kühlmittel-Reinigungsvorrichtung für eine Werkzeugmaschine (1) nach Anspruch 1, wobei der Trichter (5) am Einlass (6) eine Leck-Vermeidungseinrichtung aufweist, die verhindert, dass das darin aufgenommene Flüssig-Kühlmittel in den Reintank (20) ausläuft.

4. Flüssig-Kühlmittel-Reinigungsvorrichtung für eine Werkzeugmaschine (1) nach Anspruch 2, wobei der Trichter (5) am Einlass (6) eine Leck-Vermeidungseinrichtung aufweist, die verhindert, dass das darin aufgenommene Flüssig-Kühlmittel in den Reintank (20) ausläuft.

5. Flüssig-Kühlmittel-Reinigungsvorrichtung für eine Werkzeugmaschine (1) nach Anspruch 1, wobei der Abscheider/Reiniger (10) für die nicht-magnetische Substanz ein Zyklon-Typ-Entferner ist, und ein Rest-Kühlmittel vom Schlamm, das vom Zyklon-Typ-Entferner abgegeben wird, abgeschieden und gesammelt und dann dem magnetischen Separator (3) bereitgestellt wird.

6. Flüssig-Kühlmittel-Reinigungsvorrichtung für eine Werkzeugmaschine (1) nach Anspruch 1, wobei die Pumpe (P1, P2) Drain abgibt, und der Drain dem magnetischen Abscheider (3) oder dem Trichter (5) bereitgestellt wird.

7. Flüssig-Kühlmittel-Reinigungsvorrichtung für eine Werkzeugmaschine (1) nach Anspruch 2, wobei die Pumpe (P1, P2) Drain abgibt, und der Drain dem magnetischen Abscheider (3) oder dem Trichter (5) bereitgestellt wird.

8. Flüssig-Kühlmittel-Reinigungsvorrichtung für eine Werkzeugmaschine (1) nach Anspruch 3, wobei die Pumpe (P1, P2) Drain abgibt, und der Drain dem magnetischen Abscheider (3) oder dem Trichter (5) bereitgestellt wird.

9. Flüssig-Kühlmittel-Reinigungsvorrichtung für eine Werkzeugmaschine (1) nach Anspruch 4, wobei die Pumpe (P1, P2) Drain abgibt, und der Drain dem magnetischen Abscheider (3) oder dem Trichter (5) bereitgestellt wird.

10. Flüssig-Kühlmittel-Reinigungsvorrichtung für eine Werkzeugmaschine (1) nach Anspruch 5, wobei die Pumpe (P1, P2) Drain abgibt, und der Drain dem magnetischen Abscheider (3) oder dem Trichter (5) bereitgestellt wird.

11. Flüssig-Kühlmittel-Reinigungsvorrichtung für eine Werkzeugmaschine (1) nach einem der Ansprüche 1 und 5 bis 10, wobei der magnetische Abscheider (3) und die Pumpe (P1, P2) kontinuierlich für einen vorgegebenen Zeitraum weiter arbeiten, wenn die Werkzeugmaschine (1) abgeschaltet wird.

## Revendications

1. Dispositif de nettoyage de liquide de refroidissement pour une machine-outil (1), comprenant :
un séparateur magnétique (3) qui retire principalement une substance magnétique d'un liquide de refroidissement usé généré par une machine-outil (1) ;
un séparateur/purificateur de substance non magnétique (10) qui retire principalement une substance non magnétique d'un liquide de refroidissement à partir duquel une substance magnétique a été retirée par le séparateur magnétique (3) ;
un réservoir de liquide propre (20) qui stocke du liquide de refroidissement propre à partir duquel une substance non magnétique a été retirée par le séparateur/purificateur de substance non magnétique (10) ; et
une pompe (P1, P2) qui aspire et fournit le liquide de refroidissement au séparateur/purificateur de substance non magnétique (10) ;
une trémie (5) qui reçoit le liquide de refroidissement, à partir duquel une substance magnétique a été retirée par le séparateur magnétique (3), dans le réservoir de liquide propre (20),
la trémie (5) comprenant une entrée (6) par laquelle le liquide de refroidissement propre stocké dans le réservoir de liquide propre (20) est introduit, et
la pompe (P1, P2) étant agencée pour aspirer le liquide de refroidissement dans la trémie (5) accompagné d'une quantité prédéterminée du liquide de refroidissement propre pris dans l'entrée (6), et pour fournir le liquide de refroidissement au séparateur/purificateur de substance non magnétique (10) ;
**caractérisé en ce que**
la trémie (5) comprend, sur une paroi latérale au voisinage du niveau de liquide dans le réservoir de liquide propre (20), un accès d'aspiration pouvant être ouvert et fermé (51) qui s'ouvre seulement vers l'intérieur lorsque le liquide de refroidissement est aspiré par la pompe (P1, P2).

2. Dispositif de nettoyage de liquide de refroidissement pour une machine-outil (1) selon la revendication 1, dans lequel le séparateur/purificateur de substance non magnétique (10) est un système d'élimination de type cyclone ou un purificateur de type filtre.

3. Dispositif de nettoyage de liquide de refroidissement pour une machine-outil (1) selon la revendication 1, dans lequel la trémie (5) comprend, au niveau de l'entrée (6), un moyen d'empêchement de fuite qui empêche le liquide de refroidissement reçu dedans de fuir dans le réservoir de liquide propre (20).

4. Dispositif de nettoyage de liquide de refroidissement pour une machine-outil (1) selon la revendication 2, dans lequel la trémie (5) comprend, au niveau de l'entrée (6), un moyen d'empêchement de fuite qui empêche le liquide de refroidissement reçu dedans de fuir dans le réservoir de liquide propre (20).

5. Dispositif de nettoyage de liquide de refroidissement pour une machine-outil (1) selon la revendication 1, dans lequel le séparateur/purificateur de substance non magnétique (10) est un dispositif d'élimination de type cyclone, et
un liquide de refroidissement résiduel est séparé et recueilli à partir de la boue évacuée par le dispositif d'élimination de type cyclone, puis est transféré vers le séparateur magnétique (3).

6. Dispositif de nettoyage de liquide de refroidissement pour une machine-outil (1) selon la revendication 1, dans lequel la pompe (P1, P2) est agencée pour évacuer une vidange, et la vidange est transférée vers le séparateur magnétique (3) ou la trémie (5).

7. Dispositif de nettoyage de liquide de refroidissement pour une machine-outil (1) selon la revendication 2, dans lequel la pompe (P1, P2) est agencée pour évacuer une vidange et la vidange est transférée vers le séparateur magnétique (3) ou la trémie (5).

8. Dispositif de nettoyage de liquide de refroidissement pour une machine-outil (1) selon la revendication 3, dans lequel la pompe (P1, P2) est agencée pour évacuer une vidange, et la vidange est transférée vers le séparateur magnétique (3) ou la trémie (5).

9. Dispositif de nettoyage de liquide de refroidissement pour une machine-outil (1) selon la revendication 4, dans lequel la pompe (P1, P2) est agencée pour évacuer une vidange, et la vidange est transférée vers le séparateur magnétique (3) ou la trémie (5).

10. Dispositif de nettoyage de liquide de refroidissement pour une machine-outil (1) selon la revendication 5, dans lequel la pompe (P1, P2) est agencée pour évacuer une vidange, et la vidange est transférée vers le séparateur magnétique (3) ou la trémie (5).

11. Dispositif de nettoyage de liquide de refroidissement pour une machine-outil (1) selon l'une quelconque des revendications 1, 5 à 10, dans lequel, lorsque la machine-outil (1) est arrêtée, le séparateur magnétique (3) et la pompe (P1, P2) continuent à fonctionner pendant une durée prédéterminée après l'arrêt.
